# EUROPEAN PATENT APPLICATION

(11) **EP 4 546 202 A2**
(43) Date of publication of application: **30.04.2025**
(21) Application number: 25164276.5
(22) Date of filing: 04.10.2022
(51) Int. Cl.: G06F 30/20

(54) **SYSTEMS AND METHODS TO IMPROVE THE ACCURACY AND MANUFACTURABILITY IN AN ADDITIVE MANUFACTURING COMPENSATION PROCESS**

(30) Priority: 20.10.2021 US 202163257770 P
(62) Divisional of application: 22199479.1
(71) Applicant: General Electric Company, Schenectady, NY 12345 (US)
(72) Inventor: YANG, Pinghai, Schenectady, 12345 (US); HIX, Kenneth, Schenectady, 12345 (US); SUMNER, Johanna L., Schenectady, 12345 (US); MCCARTHY, Brian S., Schenectady, 12345 (US); BRAULT, Michelle, Schenectady, 12345 (US)
(74) Representative: Hafner & Kohl PartmbB

(57) **Abstract**

A system (100) and method (300) for creating pre-compensated parts through additive manufacturing by providing more precise compensation in part regions either through a user specified selection of the region or an automatic selection of the region. An additive manufacturing system (100) first generates a computer-aided design (CAD) model (101) and then produces a component (102) and measures the physical representation of the component (102), then determines the amount to be compensated and generates a compensation field using multi-level b-spline morphing over the entire part to create a 3-D part. Embodiments can also include automation to determine the best level to morph all the points on the entire additive manufactured part, using incremental morphs, determining the correct morphing level locally, and using weights to determine what regions receive high-level morphs as they are compensated.

## Description

The present disclosure relates, generally, to additive manufacturing processes and, more specifically, to geometry-distortion mitigation manufacturing processes and systems including measurement-based compensation.

### BACKGROUND

Additive manufacturing (AM) processes may be used to fabricate precision three-dimensional components from a digital model. Such components can be fabricated using an additive process, where successive layers of material are solidified one on top of the other. A growing trend of AM is moving from prototyping to tooling applications and complex end-use part production. For example, metal powder-bed AM processes have grown more than 50% since 2014, driven by the advantages of AM and enabling on-demand manufacturing.

A fundamental challenge that remains to be solved in metal powder-bed AM is distortion mitigation. The impact of distortion during an AM process, which is caused by one or more of rapid solidification rates, severe temperature gradients, and temperature-dependent phase transformation, is that multiple (e.g., five or more) iterations of compensation is often required before a computer-aided design (CAD) image can be turned into a geometrically relevant part. Unfortunately, many iterations typically required a timeframe of months to produce the geometrically relevant part.

### BRIEF DESCRIPTION OF THE DRAWINGS

FIG. 1 schematically depicts an illustrative distributed additive manufacturing system that includes a computer system according to one or more embodiments shown and described herein;
FIG. 2 depicts an illustrative system for additive manufacturing incorporating the computer system of FIG. 1;
FIG. 3 depicts an illustrative process for morphing additional levels to compensate for over-fitting and under-fitting in the additive manufacturing systems of FIGS. 1-2;
FIG. 4 depicts two illustrative methods for morphing in the additive manufacturing systems of FIGS. 1-2;
FIG. 5 depicts various images of an additively manufactured part using various morphing methods; and
FIG. 6 depicts a computer system within the additive manufacturing system of FIG. 1.

### DETAILED DESCRIPTION

The present disclosure generally relates to devices, systems, and methods for compensating in an additive manufacturing process by generating a nominal computer-aided design (CAD) image of a component. The devices, systems, and methods of the present disclosure help create more accurate pre-compensated parts and provides better manufacturability and accuracy of compensated parts by providing a new way to specify the degree to which the morphed part geometry is fit to the data. This is accomplished by using constrained morphing, which can include forcing an orientation or height on a part region, localized and global-to-local morphing, wherein there are areas of more or less refined compensation on the part that are set or automatically set by a user, and by incorporating product and manufacturing information to specify part regions requiring more precise compensation.

In general, iterative compensation approaches and procedures may be classified into two major types: measured data based approaches and simulation data based approaches. In some aspects regarding an AM type of manufacturing, a CAD image may be used as a basis for producing a physical component. However, when a product of the AM process is printed, it is often warped or otherwise distorted, at least in part, from the dimensions of the CAD image due to one or more factors (e.g., thermal distortion, etc.).

A traditional AM process might include printing a component based on a CAD image design, measuring the produced (i.e., printed) component to obtain measurement data including a deviation between the printed physical component and the ideal CAD image of the component, morphing (i.e., changing) a geometry of the CAD image based on the measurement data by inversing the measured deviation and applying it to the CAD image to get a compensated geometry, submitting the morphed CAD image to the AM printing process, and repeating the preceding operations for several iterations in an effort to produce the component with acceptable residual geometric error(s).

Traditional processes may use unconstrained compensation leading to under-fitting and over-fitting when the part is created through the AM process. The devices, systems, and methods of the present disclosure utilize constrained compensation in the morphing process, which means that selected geometry features are morphed with different levels allowing for a better-fit part to be produced. This method can include adaptive global-to-local compensation where a higher and more refined level of morphing is applied in pre-defined zones and a lower or more coarse level of morphing is applied to the rest of the part. This creates a more accurate part and saves build time.

In some aspects, components produced by AM processes oftentimes simply apply a single b-spline morphing level to the entire build part to be compensated. (Any reference to b-spline morphing can refer to the disclosure in US20170368753A1, which describes b-spline morphing as including a b-spline surface geometry in the CAD image along with using a b-spline tensor fitting with multi-level b-spline interpolation and approximation, with tri-cubic, linear, quadratic, quartic, and other b-splines used, where a sequence of b-spline functions is generated and refinement can be used to combine the functions). This process can require a knowledgeable user to specify a particular global level, which requires extensive knowledge about the particular part and its circumstances. In some instances, a component, or portions thereof, may have a tendency to over-/under-compensate in various regions using a global level and in response to a morphing procedure.

For example, if a component is being morphed to compensate for some distortion (e.g., 1 mm), portions of the subject component might change more the desired 1 mm while other portions of the component might respond by changing less than the desired 1 mm. That is, a component or portions thereof might not change the same (i.e., linearly). In another example, a single global level could result in unnecessary compensation in regions/faces that already within tolerance or insufficient compensation in regions/faces with tight tolerance. Unnecessary compensation might also result in slower convergence of the iterative compensation process, since part geometries tend to have a complex system response to a morphing operation. Also, a morph at too high of a level can result in noisy measurement data in the pre-compensated part and a morph with too low of a level smooths out the noisy measurement data but at the expense of not fitting to some distortion present in the build.

To solve this and other problems, the devices, systems, and methods of the present disclosure include a method where a user can specify "zones of refinement" on the part. In these zones, there exist features where a higher level of morphing is required (for example, a build line or other feature). A higher level of morphing is applied in these zones while a lower level of morphing would be applied to the rest of the part. Since it may be desirable to have a smooth transition between the high-level and low-level morph regions while limiting overlap between them, the high-level morph should not affect points far into the low-level morph region. The method can apply a multi-level b-spline morphing operation where all points will be morphed by the lower of the two levels, while points in the specified region will be morphed through additional levels, terminating at the desired high level.

Another embodiment of the present disclosure includes a method that utilizes automation to specify the best global level by which to morph the entire part, removing the responsibility from the user. This method applies incremental morphs to the entire part, starting at a low level. After the first morph, the deviation residuals are checked against one or more criteria. Criteria examples can include, for example, a fixed percentage of points is within a distance tolerance, all points are within a Geometrical Dimensioning and Tolerancing (GD+T) standard, and root mean squared error of all points is under a certain threshold. If all criteria are specified, a higher and higher-level morph is performed until all criteria are met.

A third embodiment of the present disclosure can automatically determine the correct morphing level locally instead of globally. This can include the following steps: assigning tolerance information to each deviation data point, running compensation at successive levels and calculating residual deviation, removing points that satisfy local tolerance, e.g., residual deviation at a given point is smaller than tolerance, moving successively through the points and returning to running the compensation at successive levels if the remaining number of data points is greater than 0. In this way, a refined compensation is applied only on tighter tolerance features. As in other methods disclosed herein, tolerance information can come from Product and Manufacturing Information (PMI), GD+T, a single global tolerance, a user specified tolerance, or similar variables.

Another embodiment can include adding weights to the data points wherein the points in tighter tolerance regions would have a larger weight. The advantages of these methods can include less geometry modification/compensation to bring part dimensions within tolerance so that there are a fewer number of iterations to be used and therefore less time is spent developing an acceptable compensated build geometry.

Examples of advanced morphing can include multiple combinations of local, global, and constrained morphing. Global morphing can be defined as applying the same b-spline morphing parameters to an entire geometry. Local morphing can be defined as b-spline morphing parameters in a specific regions that are specified differently than parameters specified outside of that region. The region may encompass only some of the geometry to be morphed. Lastly, constrained morphing can be defined as points within the constrained zone are forced to remain on the defined surface (e.g. plane) so that there is no translation along the local surface normal allowed. The result is locally points are free to move parallel to the surface but not perpendicular to the surface. Alternatively, a rigid body transformation can be applied, in this case only translation and/or rotation along x, y, z, for selected geometry features will be permitted when morphing.

Further, the methods can include an initial morph with no constraint and also defining the domain(s) of the advanced morph. This can be done by creating a bounding box using min and max points and/or creating a subset of deviation data that is only present in the region of interest. For instance, the region of interest can be a plane or curved surface with a specified "thickness" above and below it, also known as an extrusion. Deviation data can be selected manually by the user or if the deviation can be categorized based on which surfaces it is associated with on the nominal. The user can further define a transition zone that extends beyond the advanced morph region where everything in the domain(s) will be 100% advanced morphed, a point within transition region will have partial influence from the advanced morph, and everything outside of the domain(s) and corresponding transition region will have no influence from the advanced morph. The transition zone has a defined transfer function that determines how points within the zone are handled. The transition should also maintain a certain degree of continuity (e.g. C1, C2, etc). An example of a transition region definition could be a ramp function.

Multiple advanced morph domains can be defined and each region can have its own parameters independent of the others. Constrained morphing can include points that are in the domain(s) are "snapped" to ensure the constraint is applied. This constraint operation can be applied after the main b-spline morph has been performed. Alternatively, this can create new deviation vectors that can be used in an advanced morph. Global-to-local morphing can include a morphing field refinement within the advanced morph domain(s), which is defined differently than the refinement of the morphing field outside of the domain. This particular method creates an advanced morphing field using the deviation vectors modified within the domain.

The steps further can include that nominal points within the advanced morphing field are morphed according to the advanced morphing parameters. Points in the transition zone are partially morphed according to the transition zone transfer function. Points outside of the both the advanced morph domain and the transition zone are unaffected by the advanced morph and the transition.

In some embodiments, the geometry of the part is morphed with multiple different control point spacings or levels in a single morph. The control point spacing can be modified based on the presence of build lines, measurement data quality, part tolerances, wall or feature thickness, and finite element mesh spacing in simulation. The morph can further be based on measurement data or simulation data. In addition, the control point spacing in each dimension can be different and the transition region can be between different control points spacing regions. For instance, in experiments, a zone based method reduced build line depth by ~75% (0.3 mm to 0.08 mm) comparing to level 5 baseline and produced a much smoother surface.

Embodiments can further include that the morphing field has one or more constraints applied, including but not limited to, where the constraint ensures flatness of upward or downward facing surfaces, where the constraint ensures planar, parallel, or rigid body transformation of a flat or curved surface, where the constraint is applied using multiple sequential morphs, where the constraint is applied by multiplying morphing field results with a transfer function, for example a smooth ramp function, where the constraint is a planar, parallel, or rigid body, or where a transition region is applied between the constrained and unconstrained regions. Further the constraint can be used to ensure that all the points on the surface are held along a specific plane where rotation of the plane is not allowed. This constraint can prevent stair-stepping on upward facing surfaces and can be used on the build plate of a part.

The process can include utilizing a b-spline morphing process and creating one or multiple regions of interest on the image by defining a plane, a constrained morph zone distance above and below the plane and a transition zone. Within the region of interest (ROI) a constraint is defined by one of the following rules: points within the constrained zone are forced to remain on the defined plane (no translation along the plane normal allowed) and an average translation is calculated for all points in the constrained zone. Then each point can be morphed by that average along the plane normal, allowing the image surface to remain flat.

The method of morphing envisioned by the present disclosure includes (1) an initial morph with no constraint, followed by a second morph with the deviation vectors modified according to one of the rules above within the constrained zone and (2) a single morph with the deviation vectors modified according to one of the rules above within the constrained zone and a ramp function that transitions the deviation vector modifications from the constrained zone, through the transition zone, to the unconstrained zone.

Further, the process can include utilizing a b-spline morphing process by creating one or multiple regions of interest (ROI) on the image by defining: a bounding box using min/max points, creating a second set of deviation data limited to the ROI and within each ROI the following parameters are defined: B-spline morphing level or a bin size; transition region size (everything in the bounding box can be 100% local morphed), a point within the transition region, which will have partial influence from the local morph, and everything outside of the bounding box and the transition will have no influence from the local morph.

The methods of morphing can also include that an initial global morph is applied to the entire geometry, followed by subsequent morphs that apply to each ROI its corresponding parameters. The method can also include a single morph with a ramp function that transitions the morphing parameters from those defined in the ROI, through the transition zone, to morphing parameters defined for the rest of the part.

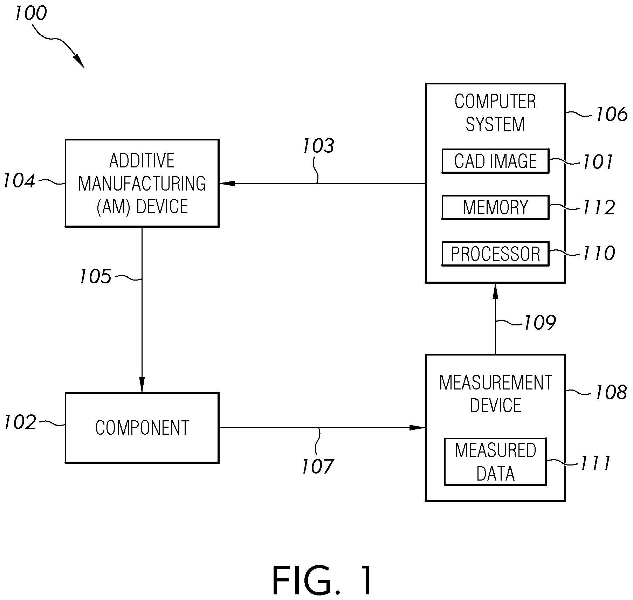

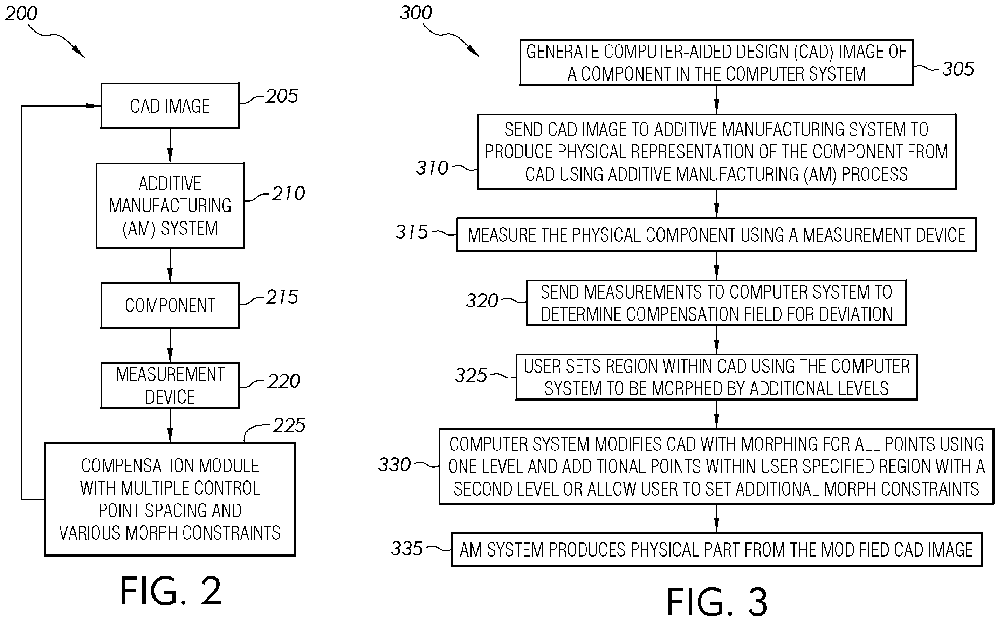

Turning to FIG. 1, a system 100 according to some embodiments is provided. In one or more embodiments, the system 100 is conditioned to perform the process 300 in FIG. 3. Software embodying these processes may be stored by any non-transitory tangible medium including a fixed disk, a floppy disk, a CD, a DVD, a Flash drive, or a magnetic tape. Examples of these processes will be described below with respect to embodiments of the system, but embodiments are not limited thereto.

Initially, at Step 103, a nominal computer-aided design (CAD) image 101 of a component 102 to manufacture via an additive manufacturing (AM) device 104 is generated by a computer system 106, which can also be known as a geometrical compensation module. The computer system 106 may include a processor 110 and a memory 112. The processor 110 may, for example, be a conventional microprocessor, and may operate to control the overall functioning of the computer system 106. In one or more embodiments, the computer system 106 may include a communication controller for allowing the processor 110, and hence the computer system 106, to engage in communication over data networks with other devices (e.g., the measurement device 108.) In one or more embodiments, the computer system 106 may include one or more memory and/or data storage devices 112, which may comprise any combination of one or more of a hard disk drive, RAM (random access memory), ROM (read only memory), flash memory, etc. The memory/data storage devices 112 may store software that programs the processor 110 and the computer system 106 to perform functionality as described herein

In one or more embodiments, the nominal CAD geometry (Boundary Representation (B-rep)) or Constructive Solid Geometry (CSG) in the image may be converted to a .stl format (stereolithography file format), or any other suitable secondary format, where the secondary format is different from the original file format. Conventionally, B-rep and CSG may be methods for representing shapes in solid modeling or imaging. Stereolithography format files may describe only the surface geometry of a three-dimensional object using triangular mesh without any representation of color, texture or other common CAD image attributes, which may make it a more desirable file format for rapid prototyping. In some embodiments, the nominal CAD image 101 in the .stl format may be transmitted 103 to the AM device 104 to build the physical component 102. In some embodiments, the nominal CAD image 101 may not be converted to another format prior to transmission to the AM device 104. It should be appreciated that a CAD image may also be referred to as a CAD model, as generally understood.

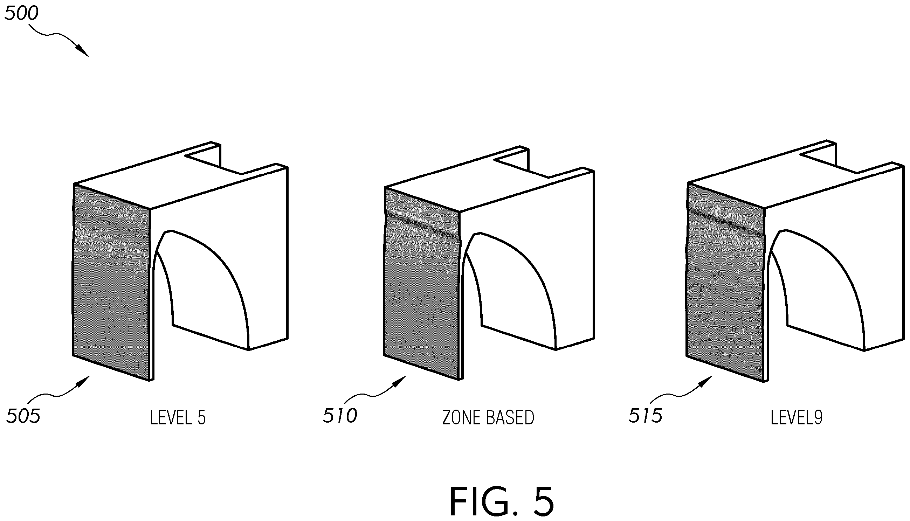

In step 105, the physical component 102 is produced using an AM process at the AM device 104. For example, as shown in FIG. 5, the physical component in FIG. 1, 102 may be a mechanical component. Any other suitable component producible by an AM process may be used. In some embodiments, prior to producing the physical component 102, the nominal CAD image 101 may be sliced with a set of planes resulting in a set of one or more two dimensional (2D) layers to obtain the path of the laser for each layer during the additive manufacturing process.

In step 107, the physical component 102 is measured via a measurement device 108 to capture the geometry of at least one of the external and internal surface of the physical component 102, FIG. 1, and as shown in FIG. 5. The measurement device 108 may be a coordinate measuring machine (CMM), an X-ray Computed Tomography (CT) system, CT, blue light, ultrasonic testing, eddy current, or any other suitable inspection/metrology device. In one or more embodiments, the measurement data may be point-cloud coordinate data. In one or more embodiments, the point-cloud coordinate measurements may be transformed (e.g., via post-processing at the AM device) into triangular-mesh data. The measured data 109 may be transmitted to the computer system 106.

At this stage the computer system generates a compensation model modifying the nominal CAD image by the compensation field, where the compensation field is further created using multi-level morphing, wherein all points of the nominal CAD image can be morphed by a lower of two levels, while points in a user-specified region are morphed through additional levels. This revised CAD image is then used to produce a physical part representation of the component.

The model compensation field can be created by using multi-level b-spline morphing for the user-specified region that takes into account a Product and Manufacturing Information (PMI), a single global tolerance, a user specified tolerance, or a tolerance gathered automatically through data analysis. In some embodiments, the model compensation field can utilize multiple different control point spacings or levels applied in a single morph for the user-specified region, and the control point spacing is modified based on a presence of build lines, measurement data quality, part tolerances, wall or feature thickness or finite element mesh spacing. In addition, the computer system 106 can create an automatic selection of a best global level for the morphing of the data based off a past performance to morph the component. The computer system 106 can also include applying incremental morphs to the entire component, starting at a low level, and a set of resulting deviation residuals are checked against a set of criteria including: a fixed percentage of points within a distance tolerance, whether all points are within a Geometric Dimensioning and Tolerancing standard, and if a root mean squared error of all points is under a threshold so that a higher level morph, which is performed until all criteria are met. A user can set a morph constraint to ensure a flatness of upward and downward facing surfaces and rigid body transformation of a flat or curved surface. In addition a correct morphing level can be automatically determined at a local level by assigning tolerance information utilizing the memory 112 and processor 110 to each deviation data point, running compensation at successive levels and calculating residual deviation, removing points that satisfy a local tolerance, and repeating for each data point.

FIG. 2 shows another embodiment of a system for accomplishing an AM process and compensating the AM part. In some embodiments, a system 200 might implement process 300 shown in FIG. 3, respectively. However, processes disclosed herein (e.g., processes 300, and other processes herein) may be performed using any suitable combination of hardware (e.g., circuit(s)), software, and combinations thereof. In one embodiment, system 200 is configured to implement processes herein such that the system is a special-purpose element configured to perform operations not performable by a general-purpose computer or device. Software embodying these processes may be stored by any non-transitory tangible medium including a fixed disk, a floppy disk, a CD, a DVD, a Flash drive, or a magnetic tape. Examples of these processes will be described below with respect to embodiments of the system, but embodiments are not limited thereto.

System 200 receives a CAD image that specifies geometric features and dimensions of a subject component to be produced by an AM system and process herein. In some instances, a CAD image 205 may be converted or otherwise (pre-)processed to convert a nominal CAD geometry to a desired format suitable for processing and import thereof by other devices and modules of system 200. System 200 includes an AM system 210 that is capable of producing a physical representation (i.e., a component 215) based on the CAD image design. The production of the component 215 by AM system 210 might include post-processing of the printed component. Component 215 is measured by a measurement device 220 to obtain measurement data of the physical component produced by AM system 210. In some embodiments, a coordinate measuring machine (CMM), x-ray, computed tomography (CT), and other precision imaging and measuring systems may be used to obtain the measurement data corresponding to the physical component 215 produced by AM system 210.

System 200 further includes a Compensation Module with multiple control point spacing and various morph constraints 225 to calculate a compensation field in order for modifying the nominal CAD image by the compensation field, where the compensation field is further created using multi-level morphing, wherein all points of the nominal CAD image are morphed by a lower of two levels, while points in a user-specified region are morphed through additional levels; and producing a physical part representation of the component from the modified nominal CAD image. In some embodiments, a compensation field herein might not, at least initially, be completely accurate. The measurement data may contribute to or otherwise be used to improve the accuracy of the simulation where a lack of accurate data may make the compensation not as accurate as desired or potentially possible. That is, in some embodiments, the measurement data may be used to improve the accuracy of the simulation modeling and other processes herein.

The compensation module 225 operates to determine a compensation field based on a deviation between the geometry of CAD image 205 and physical component 215 determined based on the measurement data produced by measurement device 220 and also based on the nonlinear compensation field generated by compensation module 225. The nominal CAD image 205 may be modified based on the compensation field determined by compensation module 225 and used by AM system 210 to produce a component that accurately corresponds to the CAD image 205. The compensation module 225 may be in the computer system 106 of FIG. 1.

FIG. 3 is an illustrative depiction of a process 300, in accordance with some embodiments herein. Initially, at operation 305, a nominal computer-aided design (CAD) image of a component to be manufactured via an AM process is generated received by the additive manufacturing system to produce a physical representation of the component from CAD using an additive manufacturing (AM) process 310.

In some instances, the geometry of the nominal CAD image geometry received at operation 310 may comprise (Boundary Representation (B-rep) or Constructive Solid Geometry (CSG) data and may be converted to a ".stl" format (stereolithography file format), or any other suitable secondary format, where the secondary format is different from the original file format, for further processing in process 300. Conventionally, B-rep and CSG may be methods for representing shapes in solid modeling. Stereolithography format files may describe only the surface geometry of a three-dimensional object using triangular mesh without any representation of color, texture or other common CAD image attributes, and may be a more desirable file format for rapid prototyping. In some embodiments, the nominal CAD image in the ".stl" format may be used by an AM system (e.g., FIG. 2, 210) to build a physical component. In some embodiments, the nominal CAD image received at operation 310 might not be converted to another format prior to transmission to an AM system.

At operation 310, a physical representation of the component is produced using an AM process. Process 300 then proceeds from operation 310 to operation 315 where the physical component produced by the AM system is measured via a measurement device to capture measurement data including the geometry of at least one of the external and/or internal surface of the physical component. The measurement device may be a CMM, an X-ray, CT system, or any other suitable inspection/measurement device. In some embodiments, the measurement data may be point-cloud coordinate data. In one embodiment, the point-cloud coordinate measurements may be transformed (e.g., via post-processing at the AM system) into triangular-mesh data.

At operation 320, a deviation between a geometry of the CAD image used to produce the physical component and the measurement data of the physical component obtained at operation 315 is determined. The determined deviation is further evaluated at 325 to ascertain whether the initial physical component produced by the AM system is accurately produced, within acceptable tolerances, as determined for an execution of process 300.

In the event the initially produced physical component is determined to be acceptable (i.e., meeting or exceeding design geometrical criteria), then process 300 may terminate at 330 without further refinements to the physical component.

In the event the initially produced physical component is determined not to be acceptable at decision point 320, then process 300 may proceed as further illustrated to modify the CAD image design so that a sufficiently accurate physical component can be produced by the AM system. At operation 320, the measurement data is sent to the computer system 106 to determine the compensation field to alter the CAD in order to compensate for the deviation of the measurement data from the CAD data.

In some embodiments, at this point, the user can set regions within the CAD using the computer system from FIG. 1 or other means so that regions can be morphed by different levels 325. The computer system 106 at this point can then morph all points using one level and additional points within user specified region with a second level or allow user to set additional morph constraints in order to create a modified nominal CAD image at operation 330. Finally, the AM system produces the physical part from the modified nominal CAD image at operation 335.

Referring still to FIG. 3, and in particular to operation 335, the nominal CAD image is modified by the compensation field determined at operation 330. In some embodiments, the overall modified shape of the component may be larger than the nominal shape to account for some expected shrinkage. In some embodiments, the modified shape may include one or more regions that are larger than the nominal shape and one or more regions that are smaller than the nominal shape (i.e., nonlinearity). The regions that are larger than the nominal shape may account for expected shrinkage, while regions that are smaller than the nominal shape may account for regions that expand due to the stress of the AM process. In one or more embodiments, the nominal CAD image (e.g., nominal triangular mesh) may be modified by the compensation field (e.g., represented by tri-variate B-spline hyper-patch) to have a modified shape. In one or more embodiments, the nodes or points may be moved from a first position in the nominal CAD image to the modified position (e.g., second position) per the compensation field to achieve the modified shape. Process 300 concludes with a production of a physical representation of the component based on the modified nominal CAD image.

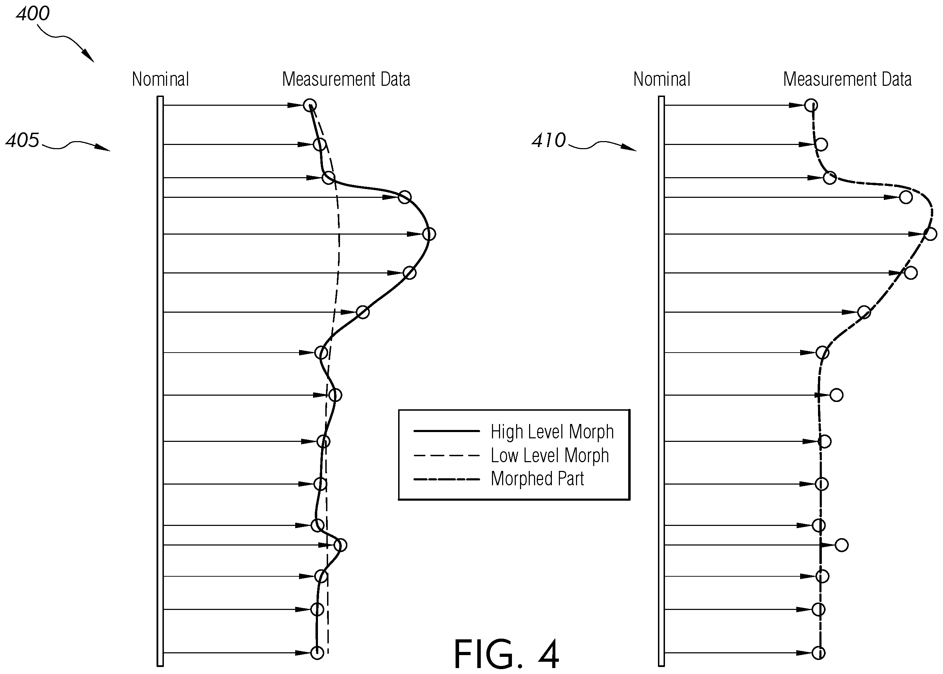

FIG. 4 is a depiction of morphing using only high level and low level morphing in 405 and an embodiment of the current system and method in 410. As depicted in the figure, in 405 in particular, a high-level morph will result in overfitting to measurement noise, while a low level morph may not capture the real features of the measurement data. 410 shows the preferred method of applying multi-level b-spline morphing, where all points are morphed by the lower of two levels while points in the specified region are morphed through additional levels, terminating at the desired high level. At the beginning of 410, there is a low level morph, followed by a high level morph, with a transition region and then a low level morph. This creates a smoother transition region and allows for a smoother finish on the part.

FIG. 5 shows three examples of different levels of morphing. 505 depicts a level 5 morph, where the level is too low and the part is too smooth and cannot capture the build line distortion feature. 515 shows a level 9 morph, which captures the build line but picks up a lot of measurement and print noise. And 510 shows a zone based approach to morphing, which captures the build line and filters out noise to produce a more accurate part.

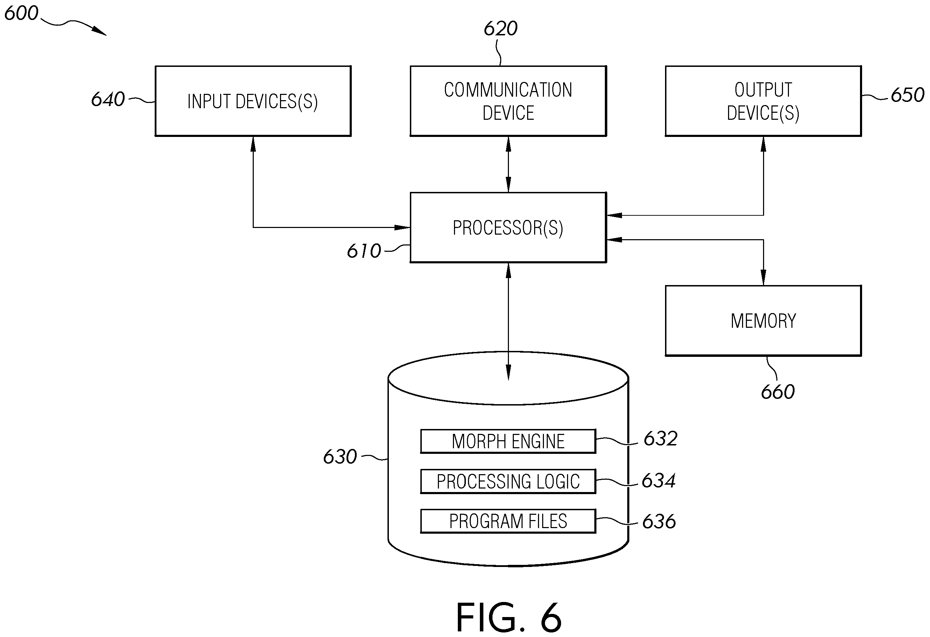

FIG. 6 is a block diagram of a computing system 600 according to some embodiments. System 600 may comprise a general-purpose or special-purpose computing apparatus and may execute program code to perform any of the methods, operations, and functions described herein. System 400 may comprise an implementation of one or more systems (e.g., system 200, or system 600) and processes (e.g., 300). System 600 may include other elements that are not shown, according to some embodiments.

System 600 includes processor(s) 610 operatively coupled to a communication device 620, data storage device 630, one or more input devices 640, one or more output devices 650, and memory 660. Communication device 620 may facilitate communication with external devices, such as a data server and other data sources providing access, for example, to a CAD image design repository and other systems, devices, and processing modules such as, for example, a compensation module (e.g., FIG. 2, 225). Input device(s) 640 may comprise, for example, a keyboard, a keypad, a mouse or other pointing device, a microphone, knob or a switch, an infrared (IR) port, a docking station, and/or a touch screen. Input device(s) 640 may be used, for example, to enter information into system 600. Output device(s) 650 may comprise, for example, a display (e.g., a display screen to display a nonlinear scale factor map), a speaker, and/or a printer.

Data storage device 630 may include any appropriate persistent storage device, including combinations of magnetic storage devices (e.g., magnetic tape, hard disk drives and flash memory), optical storage devices, Read Only Memory (ROM) devices, etc., while memory 660 may comprise Random Access Memory (RAM), Storage Class Memory (SCM) or any other fast-access memory.

A morph engine 632 may include program code executed by processor(s) 610 (and within the execution engine) to cause system 600 to perform any one or more of the processes described herein. Embodiments are not limited to execution by a single apparatus. Processing logic 634 may operate to further control processor 610 to effectuate the processes disclosed herein. Data storage device 630 may also store data and other program files 636 for providing additional functionality and/or which are necessary for operation of system 600, such as device drivers, operating system files, etc.

As will be appreciated by one skilled in the art, aspects of the present disclosure may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

The steps of one embodiment of the process can include generating a CAD image of a component; producing a physical representation of the component from the nominal CAD image using an additive manufacturing (AM) process; measuring the physical representation of the component to obtain measurement data; determining a deviation between a geometry of the nominal CAD image and the measurement data of the physical representation of the component; determining a compensation field based on the determined deviation between the geometry of the nominal CAD image and the measurement data of the physical representation of the component; modifying the nominal CAD image by the compensation field, where the compensation field is further created using multi-level morphing, wherein all points of the nominal CAD image are morphed by a lower of two levels, while points in a user-specified region are morphed through additional levels; and producing a physical part representation of the component from the modified nominal CAD image.

The method can further utilize a morph for the user-specified region that takes into account a Product and Manufacturing Information (PMI), a single global tolerance, a user specified tolerance, or a tolerance gathered automatically through data analysis.

The method can also utilize multiple different control point spacing or levels applied in a single morph for the user-specified region, and the control point spacing is modified based on a presence of build lines, measurement data quality, part tolerances, wall or feature thickness or finite element mesh spacing.

In addition, the method can include an automatic selection of a best global level to morph the component and applying incremental morphs to the entire component, starting at a low level, and a set of resulting deviation residuals are checked against a set of criteria including: a fixed percentage of points within a distance tolerance, whether all points are within a Geometric Dimensioning and Tolerancing standard, and if a root mean squared error of all points is under a threshold so that a higher level morph, which is performed until all criteria are met. The method can include a morph constraint to ensure a flatness of upward and downward facing surfaces and rigid body transformation of a flat or curved surface and wherein a correct morphing level is automatically determined at a local level by assigning tolerance information to each deviation data point, running compensation at level n and calculating residual deviation, removing points that satisfy a local tolerance, and repeating for each data point. There can also be weights applied to data points based on region with tighter tolerance regions having larger weights.

The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

It should be noted that any of the methods described herein can include an additional step of providing a system comprising distinct software modules embodied on a computer readable storage medium; the modules can include, for example, any or all of the elements depicted in the block diagrams and/or described herein; by way of example and not limitation, a geometrical compensation module. The method steps can then be carried out using the distinct software modules and/or sub-modules of the system, as described above, executing on one or more hardware processors. Further, a computer program product can include a computer-readable storage medium with code adapted to be implemented to carry out one or more method steps described herein, including the provision of the system with the distinct software modules.

It should now be understood that the devices, systems and methods described herein result in an improved AM produced part by applying multi-level b-spline morphing to various regions of the part.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

All systems and processes discussed herein may be embodied in program code stored on one or more non-transitory computer-readable media. Such media may include, for example, a floppy disk, a CD-ROM, a DVD-ROM, a Flash drive, magnetic tape, and solid state Random Access Memory (RAM) or Read Only Memory (ROM) storage units. Embodiments are therefore not limited to any specific combination of hardware and software.

Embodiments described herein are solely for the purpose of illustration. Those in the art will recognize other embodiments may be practiced with modifications and alterations to that described above.

This written description uses examples to explain the disclosure, including the best mode, and also to enable any person skilled in the art to practice the disclosure, including making and using any devices or systems and performing any incorporated methods. The patentable scope of the disclosure is defined by the claims appended hereto, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the present disclosure are provided by the subject matter of the following clauses:

A computer-implemented method, comprising: generating a nominal computer-aided design (CAD) image of a component; producing a physical representation of the component from the nominal CAD image using an additive manufacturing (AM) process; measuring the physical representation of the component to obtain measurement data; determining a deviation between a geometry of the nominal CAD image and the measurement data of the physical representation of the component; determining a compensation field based on the determined deviation between the geometry of the nominal CAD image and the measurement data of the physical representation of the component; modifying the nominal CAD image by the compensation field, where the compensation field is further created using multi-level morphing, wherein all points of the nominal CAD image are morphed by a lower of two levels, while points in a user-specified region are morphed through additional levels; and producing a physical part representation of the component from the modified nominal CAD image.

The computer-implemented method as described in any preceding clause, wherein the computer-implemented method utilizes a morph for the user-specified region that takes into account a Product and Manufacturing Information (PMI), a single global tolerance, a user specified tolerance, or a tolerance gathered automatically through data analysis.

The computer-implemented method as described in any preceding clause, wherein the computer-implemented method utilizes multiple different control point spacing or levels applied in a single morph for the user-specified region, and the control point spacing is modified based on a presence of build lines, measurement data quality, part tolerances, wall or feature thickness or finite element mesh spacing.

The computer-implemented method as described in any preceding clause, wherein the computer-implemented method includes an automatic selection of a best global level to morph the component.

The computer-implemented method as described in any preceding clause, wherein the computer-implemented method includes applying incremental morphs to the entire component, starting at a low level, and a set of resulting deviation residuals are checked against a set of criteria including: a fixed percentage of points within a distance tolerance, whether all points are within a Geometric Dimensioning and Tolerancing standard, and if a root mean squared error of all points is under a threshold so that a higher level morph, which is performed until all criteria are met.

The computer-implemented method as described in any preceding clause, further comprising a morph constraint to ensure a flatness of upward and downward facing surfaces and rigid body transformation of a flat or curved surface.

The computer-implemented method as described in any preceding clause, wherein a correct morphing level is automatically determined at a local level by assigning tolerance information to each deviation data point, running compensation at level n and calculating residual deviation, removing points that satisfy a local tolerance, and repeating for each data point.

The computer-implemented method as described in any preceding clause, wherein there are weights applied to data points based on region with tighter tolerance regions having larger weights.

A computer-program containing programming instructions that cause a processor to: generate a nominal computer-aided design (CAD) image of a component; produce a physical representation of the component from the nominal CAD image using an additive manufacturing (AM) process; measure the physical representation of the component to obtain measurement data; determine a deviation between a geometry of the nominal CAD image and the measurement data of the physical representation of the component; determine a compensation field based on the determined deviation between the geometry of the nominal CAD image and the measurement data of the physical representation of the component; modifying the nominal CAD image by the compensation field, where the compensation field is further created using multi-level morphing, wherein all points of the nominal CAD image are morphed by a lower of two levels, while points in a user-specified region are morphed through additional levels; and produce a physical part representation of the component from the modified nominal CAD image.

The computer-program as described in any preceding clause wherein the computer-program utilizes, for a user-specified region, Product and Manufacturing Information (PMI), a single global tolerance, a user specified tolerance, or a tolerance gathered automatically through data analysis.

The computer-program as described in any preceding clause, wherein the computer-program utilizes multiple different control point spacing or levels applied in a single morph for the user-specified region, and the control point spacing is modified based on a presence of build lines, measurement data quality, part tolerances, wall/feature thickness or finite element mesh spacing.

The computer-program as described in any preceding clause, wherein a correct morphing level is automatically determined at a local level by assigning tolerance information to each deviation data point, running compensation at level n and calculating residual deviation, removing points that satisfy a local tolerance, and repeating for each data point.

The computer-program as described in any preceding clause, wherein the computer-program includes applying incremental morphs to the entire component, starting at a low level, and a set of resulting deviation residuals are checked against a set of criteria including: a fixed percentage of points within a distance tolerance, whether all points are within a Geometric Dimensioning and Tolerancing standard, and if a root mean squared error of all points is under a threshold.

The computer-program as described in any preceding clause, wherein there is a constraint to ensure a flatness of upward and downward facing surfaces and rigid body transformation of a flat or curved surface.

The computer-program as described in any preceding clause, wherein there are weights applied to data points based on region with tighter tolerance regions having larger weights.

A system comprising: an additive manufacturing device operative to fabricate a first component; a geometrical compensation module that is communicatively coupled with the additive manufacturing device; and a memory in communication with the additive manufacturing device and storing program instructions, the geometrical compensation module operative with the program instructions and the additive manufacturing device to perform functions as follows: generating a nominal computer-aided design (CAD) image of a component; producing a physical representation of the component from the nominal CAD image using an additive manufacturing (AM) process; measuring the physical representation of the component to obtain measurement data; determining a deviation between a geometry of the nominal CAD image and the measurement data of the physical representation of the component; determining a compensation field based on the determined deviation between the geometry of the nominal CAD image and the measurement data of the physical representation of the component; modifying the nominal CAD image by the compensation field, where the compensation field is further created using multi-level morphing, wherein all points of the nominal CAD image are morphed by a lower of two levels, while points in a user-specified region is morphed through additional levels; and producing a physical part representation of the component from the modified nominal CAD image.

The system as described in any preceding clause, wherein the system utilizes, for a user-specified region, Product and Manufacturing Information (PMI), a single global tolerance, a user specified tolerance, or a tolerance gathered automatically through data analysis.

The system as described in any preceding clause, where the system utilizes multiples different control point spacing or levels applied in a single morph for the user-specified region, and the control point spacing is modified based on a presence of build lines, measurement data quality, part tolerances, wall/feature thickness or finite element mesh spacing.

The system as described in any preceding clause, wherein the system includes an automatic selection of a best global level to morph the component.

The system as described in any preceding clause, wherein the system includes applying incremental morphs to the entire component, starting at a low level, and a set of resulting deviation residuals are checked against a set of criteria including: a fixed percentage of points within a distance tolerance, whether all points are within a Geometric Dimensioning and Tolerancing standard, and if a root mean squared error of all points is under a threshold.

The system as described in any preceding clause, wherein there is a constraint to ensure a flatness of upward and downward facing surfaces and rigid body transformation of a flat or curved surface.

The system as described in any preceding clause, wherein a correct morphing level is automatically determined at a local level by assigning tolerance information to each deviation data point, running compensation at level n and calculating residual deviation, removing points that satisfy a local tolerance, and repeating for each data point.

The system as described in any preceding clause, wherein there are weights applied to data points based on region with tighter tolerance regions having larger weights.

## Claims

1. A computer-implemented method, comprising:
generating a nominal computer-aided design (CAD) model (101) of a component (102);
measuring a physical representation of the component (102) produced by an additive manufacturing (AM) process from the nominal CAD model to obtain measurement data (111);
determining a deviation between a geometry of the nominal CAD model and the measurement data of the physical representation of the component (102);
assigning tolerance information to each deviation data point;
determining a compensation field based on the determined deviation between the geometry of the nominal CAD model (101) and the measurement data (111) of the physical representation of the component (102);
modifying the nominal CAD model (101) by the compensation field, where the compensation field is further created using constrained morphing, wherein all points of the nominal CAD model (101) are morphed by one of multi-levels, while points in a user-specified region are morphed through additional levels if an acceptable tolerance is not reached and if an acceptable tolerance is reached then not applying additional b-spline morphing or changing levels; and
causing production of a physical part representation of the component (102) from the modified nominal CAD model (101).

2. The computer-implemented method as described in claim 1, wherein the computer-implemented method utilizes a morph for the user-specified region that takes into account a Product and Manufacturing Information (PMI), a single global tolerance, a user specified tolerance, or a tolerance gathered automatically through data analysis.

3. The computer-implemented method as described in any of claims 1-2, wherein the computer-implemented method utilizes multiple different control point spacing or levels, which can be different along the x, y, and z axis, applied in a single morph for the user-specified region, and the control point spacing is modified based on a presence of build lines, measurement data quality, part tolerances, wall or feature thickness or finite element mesh spacing.

4. The computer-implemented method as described in any of claims 1-3, wherein the computer-implemented method includes an automatic selection of a best global level to morph the component (102).

5. The computer-implemented method as described in any of claims 1-4, wherein the computer-implemented method includes applying incremental morphs to the entire component (102), starting at a low level, where resulting deviation residuals are checked against a set of criteria including: a fixed percentage of points within a distance tolerance, whether all points are within a Geometric Dimensioning and Tolerancing standard, and if a root mean squared error of all points is under a threshold so that a higher level morph, which is performed until all criteria are met.

6. A computer-program containing programming instructions that cause a processor to:
generate a nominal computer-aided design (CAD) model (101) of a component (102);
measure a physical representation of the component (102) produced by an additive manufacturing (AM) process from the nominal CAD model to obtain measurement data;
determine a deviation between a geometry of the nominal CAD model (101) and the measurement data of the physical representation of the component (102);
determine a compensation field based on the determined deviation between the geometry of the nominal CAD model (101) and the measurement data of the physical representation of the component (102);
modify the nominal CAD model (101) by the compensation field, where the compensation field is further created using constrained morphing, wherein all points of the nominal CAD model (101) are morphed by one of multi-levels, while points in a user-specified region are morphed through additional levels if an acceptable tolerance is not reached and if an acceptable tolerance is reached then not applying additional b-spline morphing or changing levels; and
cause production of a physical part representation of the component (102) from the modified nominal CAD model (101).

7. The computer-program as described in claim 6, wherein the computer-program utilizes, for a user-specified region Product and Manufacturing Information (PMI), a single global tolerance, a user specified tolerance, or a tolerance gathered automatically through data analysis.

8. The computer-program as described in any of claims 6-7, wherein the computer-program utilizes multiple different control point spacing or levels, which can be different along the x, y, and z axis, applied in a single morph for the user-specified region, and the control point spacing is modified based on a presence of build lines, measurement data quality, part tolerances, wall/feature thickness or finite element mesh spacing.

9. A system (100) comprising:
a geometrical compensation module (106); and
a memory (112) storing program instructions, the memory (112) and the geometrical compensation module (106) operative via the program instructions to perform functions as follows:
generate a nominal computer-aided design (CAD) model (101) of a component (102);
measure a physical representation of the component (102) produced by an additive manufacturing (AM) process from the nominal CAD model to obtain measurement data;
determine a deviation between a geometry of the nominal CAD model (101) and the measurement data of the physical representation of the component (102);
determine a compensation field based on the determined deviation between the geometry of the nominal CAD model (101) and the measurement data of the physical representation of the component (102);
modify the nominal CAD model (101) by the compensation field, where the compensation field is further created using constrained morphing, wherein all points of the nominal CAD model (101) are morphed by one of multi-levels, while points in a user-specified region is morphed through additional levels if an acceptable tolerance is not reached and if an acceptable tolerance is reached then not applying additional b-spline morphing or changing levels; and
cause production of a physical part representation of the component (102) from the modified nominal CAD model (101).

10. The system (100) as described in claim 9, wherein the system (100) utilizes, for a user-specified region, Product and Manufacturing Information (PMI), a single global tolerance, a user specified tolerance, or a tolerance gathered automatically through data analysis.

11. The system (100) as described in any of claims 9-10, where the system (100) utilizes multiples different control point spacing or levels, which can be different along the x, y, and z axis, applied in a single morph for the user-specified region, and the control point spacing is modified based on a presence of build lines, measurement data quality, part tolerances, wall/feature thickness or finite element mesh spacing.

12. The system (100) as described in any of claims 9-11, wherein the system (100) includes an automatic selection of a best global level to morph the component (102).

13. The system (100) as described in any of claims 9-12, wherein the system (100) includes applying incremental morphs to the entire component (102), starting at a low level, where a resulting deviation residuals are checked against a set of criteria including: a fixed percentage of points within a distance tolerance, whether all points are within a Geometric Dimensioning and Tolerancing standard, and if a root mean squared error of all points is under a threshold.

14. The system (100) as described in any of claims 9-13, wherein there is a constraint to ensure a flatness of upward and downward facing surfaces and rigid body transformation of a flat or curved surface.

15. The system (100) as described in any of claims 9-14, wherein a correct morphing level is automatically determined at a local level by assigning tolerance information to each deviation data point, running compensation at level n and calculating residual deviation, removing points that satisfy a local tolerance, and repeating for each data point.
